# EUROPÄISCHE PATENTSCHRIFT

(11) **EP 1 428 732 B1**
(45) Veröffentlichungstag und Bekanntmachung des Hinweises auf die Patenterteilung: **20.12.2006**
(21) Anmeldenummer: 03026845.2
(22) Anmeldetag: 21.11.2003
(51) Int. Cl.: B60R 21/26

(54) **Gassackmodul**
Airbag module
Module de sac gonflable

(30) Priorität: 12.12.2002 DE 20219284 U
(43) Veröffentlichungstag der Anmeldung: 16.06.2004
(73) Patentinhaber: TRW Automotive Safety Systems GmbH, 63743 Aschaffenburg (DE)
(72) Erfinder: Stricker, Christian, 63814 Mainaschaff (DE); Schneider, Michael, Dr., 63834 Sulzbach (DE)
(74) Vertreter: Sulzbach, Werner

(56) Entgegenhaltungen:
- GB-A- 2 046 125
- US-A- 5 260 038
- US-A- 5 489 118

## Beschreibung

Die Erfindung betrifft ein Gassackmodul für eine Fahrzeuginsassenrückhaltevorrichtung, mit einem Gasgenerator und einem den Gasgenerator umgebenden Diffusor mit einem topfförmigen Abschnitt. Der Diffusor ist ein vom Generator getrenntes, separates Bauteil.

Pyrotechnische Gasgeneratoren weisen üblicherweise eine Filtereinrichtung auf, um das aus dem Gasgenerator ausströmende Gas von Partikeln zu befreien. Durch das Durchströmen des Filters wird auch die Temperatur des in den Gassack gelangenden Gases herabgesetzt. Damit soll eine Schädigung des Gassackgewebes verhindert werden. Die Filter sind im allgemeinen nicht dafür ausgelegt, mechanische Belastungen aufzunehmen.

Die DE 44 45 921 C1 offenbart einen Gasgenerator, dessen Generatorgehäuse aus einem Leichtmetall besteht, wobei im Gehäuse ein Filtereinsatz angeordnet ist. Das Gehäuse kann aus einer Magnesiumlegierung in einem Druckgußverfahren gefertigt sein. Der Filtereinsatz ist als gasdurchlässiger, feinporiger Filterblock ausgebildet und besteht aus einer Vielzahl von Körnern, die durch einen Sintervorgang miteinander verbunden sind. Der Filterblock erfüllt jedoch keine tragende oder lastaufnehmende Funktion. Das den Gasgenerator umgebende Diffusorgehäuse ist zur Gewichtseinsparung ebenfalls aus einer Magnesiumlegierung im Druckgußverfahren gebildet.

Die US 5,260,038 A ist der nächstkommende Stand der Technik nach Art. 54 (2) EPÜ und zeigt einen Diffusor, der Teil eines Gasgenerators ist und einen kreisförmigen Abschnitt sowie eine äußere Wand hat. Die äußere Wand ist aus einem porösen Material gebildet, das aus einem gesinterten Metallpulver hergestellt ist, und kann beim Entweichen des Gases als Filter wirken.

In der GB 2 046 125 A ist ein Filter für einen Gasgenerator gezeigt, der aus einem gesinterten Metall besteht und als Diffusor wirkt.

Die EP 1 378 404 A1 ist der nächstliegende Stand der Technik nach Art. 54(3) EPÜ und offenbart ein:
Gassackmodul für eine Fahrzeuginsassen-Rückhaltevorrichtung, mit einem Gasgenerator und einem den Gasgenerator umgebenden Diffusor mit einem topfförmigen Abschnitt, wobei der topfförmige Abschnitt einen aus einem porösen Material bestehenden gasdurchlässigen Filterabschnitt aufweist und das poröse Material aus der Gruppe der Metallpulver, Metallfasern oder Metallschäume ausgewählt ist, wobei der topfförmige Abschnitt als Deformationselement ausgelegt ist, wobei eine Oberseite des topfförmigen Abschnitts so vom Gasgenerator beabstandet ist, daß ein Teil der Aufprallenergie eines Fahrzeuginsassen durch eine Verformung des Diffusors abgebaut werden kann.

Ziel der Erfindung ist es, ein kostengünstig und einfach zu fertigendes Gassackmodul bereitzustellen.

Dies wird bei einem erfindungsgemäßem Gassackmodul für eine Fahrzeuginsassenrückhalte vorrichtung mit den Merkmalen des Anspruchs 1 erreicht. Im Stand der Technik kann der Diffusor aus tiefgezogenen Blechen oder Gußteilen mit Ausströmöffnungen bestehen, die sehr groß sind, so daß keine Filterfunktion vorgesehen ist. Damit werden aber im Diffusor keine bei der Verbrennung von pyrotechnischem Material freigesetzten Partikel zurückgehalten. Die Erfindung sieht dagegen vor, daß der an das Außengehäuse des Gasgenerators angrenzende Diffusor, der üblicherweise aus einer Seitenwand und einem Deckel als dem topfförmigen Abschnitt sowie einem an dem dem Deckel gegenüberliegenden Rand der Seitenwand nach außen vorstehenden ringförmigen Flansch besteht, auch zur Kühlung und zum Filtern des Gases herangezogen wird. Damit muß im Inneren des Gasgenerators, der ein geschlossenes Außengehäuse aufweist, entweder nur ein kleiner dimensionierter Filter oder überhaupt kein Filter mehr vorgesehen sein. Die gute Filterwirkung des Diffusors bei gleichzeitig hoher mechanischer Belastbarkeit wird dadurch erzielt, daß der Filterabschnitt aus einem gesinterten porösen Material besteht, das aus der Gruppe der gesinterten Metallpulver, Metallfasern und Metallschäume ausgewählt ist.

Der Diffusor übernimmt also die Funktion eines Filterkäfigs, der aufgrund seiner porösen Struktur die Filtration der aus dem Gasgenerator zusammen mit dem Gasstrom austretenden heißen Partikel ermöglicht. Zusätzlich erfüllt der Diffusor auch die Funktionen eines tragenden Konstruktionselements, wie beispielsweise die Aufnahme von mechanischen Belastungen. Die Porosität des Diffusors bzw. des Filterabschnitts ist vorzugsweise so auszulegen, daß das Gas aus dem Gasgenerator ungehindert durch den Filterabschnitt hindurchströmen kann. Dabei sollte die Porengröße jedoch kleiner sein als die Partikel, die von dem Gasgenerator ausgestoßen werden. Die Größe, Form und Verteilung der Poren ist variabel und kann an den jeweiligen Anwendungsfall angepaßt werden. Der Diffusor ist trotz seines geringen Gewichts temperaturbeständig, gasdurchlässig und mechanisch belastbar.

Gemäß einer ersten und bevorzugten Ausführungsform besteht der gesamte topfförmige Abschnitt, bevorzugt sogar der gesamte Diffusor, aus dem gesinterten porösen Material, besonders bevorzugt aus gesinterten Metallfasern.

Gemäß einer zweiten Ausführungsform ist nur die Seitenwand des topfförmigen Abschnitts aus dem gesinterten porösen Material hergestellt, wobei der Deckel und die Seitenwand des Diffusors metallurgisch miteinander verbunden sind.

Die bevorzugte Ausführungsform sieht vor, daß der gesamte Diffusor aus dem gesinterten porösen Material gebildet ist. Es hat sich überraschend gezeigt, daß ein derartiges Material z.B. aus gesinterten Metallfasern trotz seiner geringen Dichte formstabil genug ist, um die Funktion z.B. eines Gassackträgers zu übernehmen, und gleichzeitig mechanisch hoch belastet werden kann.

Hierdurch bieten sich mehrere Vorteile. Die Zahl der Bauteile wird reduziert, da kein Träger zusätzlich zum internen oder externen Filter vorgesehen werden muß. Gleichzeitig werden Gewicht und Baugröße des Gassackmoduls reduziert. Ein weiterer Vorteil liegt darin, daß Standard-Gasgeneratoren eingesetzt werden können, auch bei Gelegenheiten, bei denen bei geringem Platzangebot eine zusätzliche Filterung des Gases gewünscht wird. Vorzugsweise kann jedoch ein Gasgenerator ohne zugeordneten Partikelfilter im Gasgeneratorgehäuse verwendet werden. Der Wegfall des Partikelfilters führt einerseits zu einer weiteren Gewichtseinsparung und andererseits zu einer einfacheren Herstellung, da auch der Arbeitsgang der Filtermontage entfällt. Durch die Einstellung einer definierten, feineren Porosität ist zudem die Möglichkeit gegeben, die bei der Zündung des Gasgenerators entstehenden heißen Partikel vollständig herauszufiltern. Hierdurch wird die Gefahr eines Durchbrennens des Luftsackgewebes verhindert. In vorteilhafter Weise können dann auch unbeschichtete Gassackgewebe eingesetzt werden, was zu weiteren Gewichts-, Raum- und Kosteneinsparungen führt.

Der den Gasgenerator umgebende topfförmige Abschnitt des Diffusors kann gleichzeitig als Abstandhalter für den Gasgenerator zur Wandung des an den Diffusor angrenzenden Gassacks dienen.

Das gesinterte poröse Material, insbesondere die gesinterten Metallfasern, ist so ausgelegt, daß es als Partikelfilter für durchströmendes Gas wirkt, z.B. indem die Porengröße oder die Wandstärke des Diffusors entsprechend gewählt werden. Hier ist es insbesondere von Vorteil, wenn der Diffusor von aus dem Gasgenerator in den Gassack strömenden Gas großflächig durchströmt werden kann, da sich so eine optimale Filterwirkung erzielen läßt.

Das poröse gesinterte Material kann außerdem für eine gleichmäßige Verteilung des aus dem Gasgenerator austretenden Gases sorgen. Durch die Auslegung des Filtermaterials kann auch Einfluß auf die Geschwindigkeit genommen werden, mit der das Gas in den Gassack einströmt, um eine Anpassung der Rückhaltevorrichtung an das jeweils geltende Anforderungsprofil vorzunehmen.

Erfindungsgemäß ist der topfförmige Abschnitt des Diffusors als Deformationselement ausgelegt. Hierzu ist eine Oberseite des topfförmigen Abschnitts bevorzugt vom Gasgenerator so beabstandet, daß bei einem Aufprall eines Fahrzeuginsassen ein Teil der Aufprallenergie durch die Verformung des Diffusors abgebaut werden kann. Durch die Auslegung der gesinterten Metallfasern läßt sich die zur Deformation benötigte Energie in relativ engen Grenzen vorherbestimmen, so daß eine flexible Anpassung der Rückhaltevorrichtung möglich ist.

In einer bevorzugten Ausführungsform der Erfindung ist der Gasgenerator schwingend gelagert. Der Diffusor aus dem gesinterten porösen Material dient in diesem Fall als sogenannter Tilgerkäfig, in dem der Gasgenerator, der als Tilgermasse zur Schwingungsdämpfung wirkt, schwingend gelagert ist. Da in einem solchen Fall ein Gasgenerator und Gassackwandung trennender Gassackträger unbedingt erforderlich ist, läßt sich durch die Verwendung eines Diffusors aus z.B. gesinterten Metallfasern ohne Festigkeitsverlust eine besonders hohe Raum- und Gewichtersparnis erzielen.

Die Herstellung des gesinterten porösen Materials kann nach üblichen pulvermetallurgischen Verfahren erfolgen. Die Herstellung von porösen Filtern aus Metallpulvern erfolgt vorzugsweise über kaltisostatische Formgebungsverfahren. Dabei können gleichzeitig Anschlußelemente, wie Flansche und Gewindestücke, oder Befestigungselemente in einem Arbeitsgang mit angepreßt werden. Anstelle von Metallpulvern können auch Metallfasern nach den Methoden der Pulvermetallurgie verarbeitet werden. Die daraus erhaltenen Filter zeichnen sich durch eine hohe Porosität bei geringem Strömungswiderstand, hohe Filterfeinheit und Schmutzspeicherkapazität aus. Die zu sinternden Metallfasern werden üblicherweise vervliest und dann mit oder ohne Stützgewebe durch Drucksinterung weiterverarbeitet. Auch hier es möglich, Anschluß- oder Befestigungselemente in den Grünling einzulegen und durch Sintern metallurgisch mit dem porösen gesinterten Formkörper zu verbinden.

Die Herstellung von Metallschäumen erfolgt ebenfalls über pulvermetallurgische Verfahren, vorzugsweise unter Zugabe von Treibmitteln, wie Metallhydriden. Über die Menge des Treibmittels und die Sintertemperatur und -zeit kann hier die Porosität reproduzierbar eingestellt werden.

Weitere Merkmale und Vorteile der Erfindung ergeben sich aus der nachfolgenden Beschreibung eines Ausführungsbeispiels in Verbindung mit den beigefügten Zeichnungen. In diesen zeigen:
- Figur 1 eine perspektivische Ansicht eines Diffusors eines erfindungsgemäßen Gassackmoduls;
- Figur 2 eine schematische Schnittansicht eines erfindungsgemäßen Gassackmoduls mit dem Diffusor aus Figur 1;
- Figur 3 eine perspektivische Ansicht einer weiteren Ausführungsform des Diffusors;
- Figur 4 einen Halbschnitt durch den Diffusor nach Figur 3 längs der Linie IV-IV;
- Figur 5 eine schematische Halb-Schnittansicht einer dritten Ausführungsform;
- Figur 6 eine Teilschnittansicht der dritten Ausführungsform gemäß Figur 5; und
- Figur 7 eine schematische Halb-Schnittansicht einer fünften Ausführungsform.

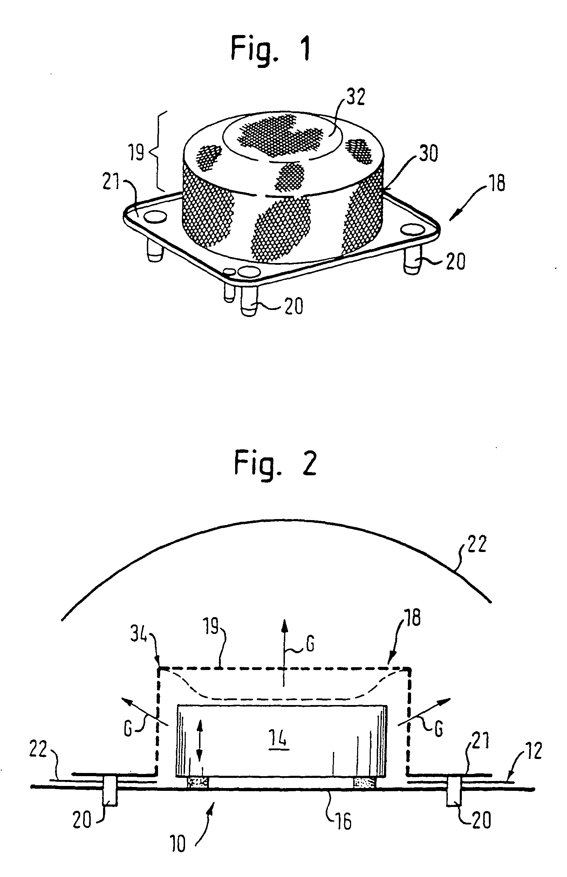

Die Figuren 1 und 2 zeigen ein Gassackmodul 10 mit einem im aufgeblasenen Zustand gezeigten Gassack 12. Ein Gasgenerator 14 ist schwingend gelagert und mit einem fahrzeugfesten Teil 16, z.B. einem Lenkrad, verbunden. Der Gasgenerator ist von einem Diffusor 18, einem sogenannten Tilgerkäfig, umgeben, der in Figur 1 im Detail dargestellt ist. Dieser Tilgerkäfig weist einen topfförmigen Abschnitt 19 mit einer zylindrischen Seitenwand 30 und einem Deckel 32 auf. An den dem Deckel 32 gegenüberliegenden Rand der Seitenwand 30 schließt sich ein ringförmiger Flansch 21 an. Über Bolzen 20, die am Flansch 21 angreifen, ist der Diffusor 18 am fahrzeugfesten Teil 16 befestigt. Der Rand einer Einströmöffnung des Gassacks 12 ist zwischen dem Flansch des Diffusors und dem fahrzeugfesten Teil 16 eingeklemmt.

Der Diffusor 18 ist zwischen dem Gasgenerator 14 und der Wandung 22 des Gassacks 12 angeordnet. Im zusammengelegten Zustand liegt der Gassack 12 auf der Oberseite des topfförmigen Abschnitts 19 auf. Die Wandung 22 des Gassacks 12 kann also an keiner Stelle in direkten Kontakt mit dem im Betriebszustand heißen Gasgenerator 14 kommen. Der Gasgenerator 14 ist so zum Diffusor 18 beabstandet angeordnet, dass er im Inneren des Diffusors 18 ungehindert seine Funktion als Schwingungsdämpfer wahrnehmen kann.

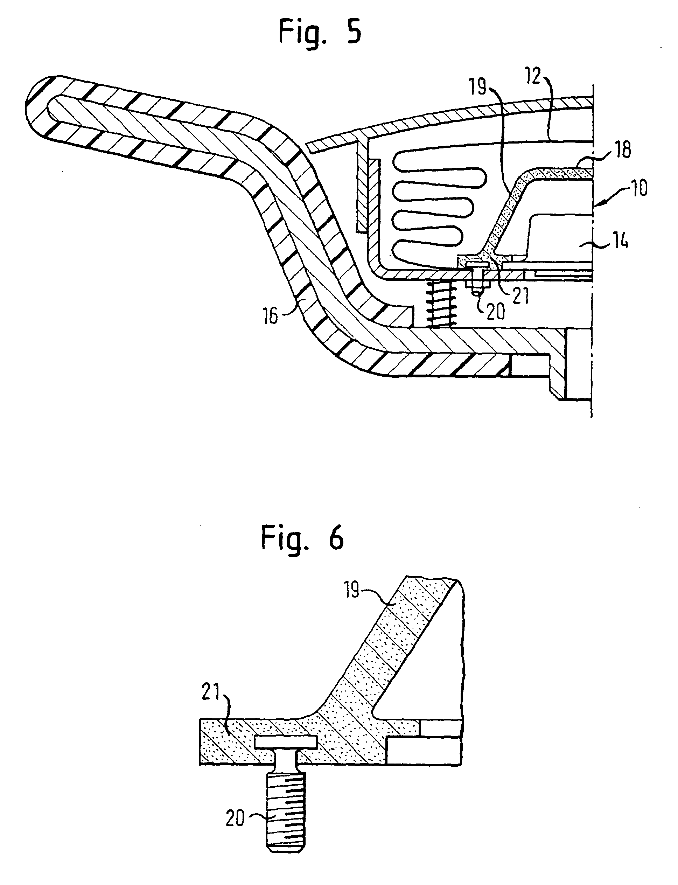

Zumindest der topfförmige Abschnitt 19 des Diffusors 18 besteht aus einem strukturstabilen gesinterten porösen Material. Das Material kann ein gesintertes Metallpulver, ein Formkörper aus gesinterten Metallfasern oder ein Metallschaum sein. Bei der Ausführungsform nach Figur 1 ist der gesamte topfförmige Abschnitt 19 aus gesintertem porösen Material gebildet, und über den gesamten topfförmigen Abschnitt 19 kann Gas G in das Innere des Gassacks 22 gelangen, so daß der gesamte topfförmige Abschnitt 19 einen Filterabschnitt 34 bildet. Die Porosität der gesinterten Metallfasern ist so eingestellt, daß Partikel, die im aus dem Gasgenerator 14 ausströmenden Gas G enthalten sind, herausgefiltert werden. Es ist kein weiteres Bauteil wie etwa ein aus Blech bestehender Gassackträger zwischen dem Gasgenerator 14 und der Gassackwandung 22 vorgesehen. Auch der Flansch 21 kann aus gesinterten Metallfasern bestehen, wie in den Figuren 5 und 6 gezeigt ist.

Zusätzlich zu der Funktion als Tilgerkäfig und als Partikelfilter dient der Diffusor 18 im hier gezeigten Beispiel außerdem als Deformationselement, um z.B. den Aufprall eines Körperteils des Fahrzeuginsassen zu dämpfen. Das gesinterte poröse Material des topfförmigen Abschnitts 19 verformt sich, wie durch die gestrichelte Linie in Figur 2 angedeutet, beim Aufprall eines Körperteils und baut so dessen Energie ab, um den Fahrzeuginsassen vor Verletzungen zu bewahren.

Der hier gezeigte Diffusor 18 kann natürlich auch zusammen mit einem nicht schwingend gelagerten Gasgenerator eingesetzt werden.

Bei einer entsprechenden Auslegung des Diffusors hinsichtlich Porosität, Durchströmbarkeit und Filterfeinheit, so daß die vom Gasgenerator erzeugten heißen Partikel vollständig zurückgehalten werden, muß der Gasgenerator keinen Filter mehr aufweisen, da diese Funktion dann komplett von dem Diffusor erfüllt wird.

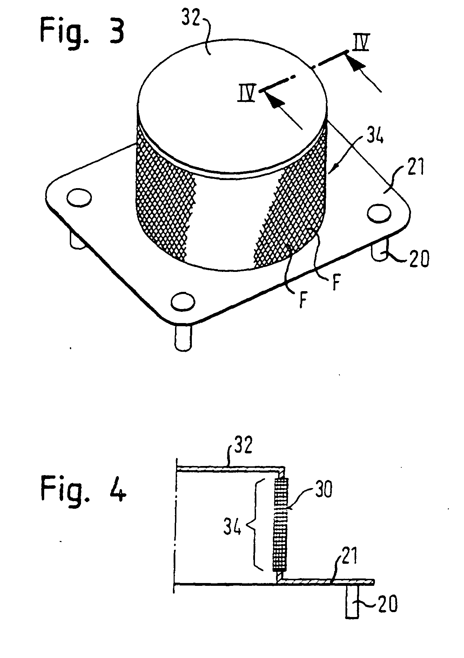

Bei der Ausführungsform nach den Figuren 3 und 4 sind der Flansch 21 und der Deckel 32 aus Blech. Fast die gesamte Seitenwand 30 (nur ein kurzer Steg am Deckel 32 und am Flansch 21 ausgenommen) wird durch den Filterabschnitt 34 gebildet, der aus gesintertem porösen Material hergestellt ist. Im konkreten Fall nach Figur 3 handelt es sich um einen Formkörper aus gesinterten Metallfasem. Der Filterabschnitt ist umfangsmäßig geschlossen und stellt die einzige Brücke zwischen dem Deckel 32 und dem Flansch 21 dar, ist also laststragend zwischen diesen Abschnitten angeordnet und an den Flansch 21 bzw. den Deckel 32 über Sinterverfahren angeformt.

Bei der in den Figuren 5 und 6 gezeigten Ausführungsform ist der Diffusor 18 vollständig aus dem gesinterten porösen Material hergestellt. In den Flansch 21 ist ein Befestigungselement 20, hier ein Bolzen mit Schraubgewinde, eingeformt und metallurgisch mit dem gesinterten porösen Material verbunden. Alternativ dazu kann vorgesehen sein, in dem Flansch 21 einen Durchbruch zu formen und das Befestigungselement 20 durchzuführen, ähnlich wie dies in Figur 1 dargestellt ist. Über das Befestigungselement 20 ist der Diffusor 18 mit einem Träger für den Gasgenerator 14 fest verbunden, der schwingend gelagert und an einem fahrzeugfesten Teil 16, hier einem Lenkrad, angebracht ist. Der Gassack 12 ist an seiner Einströmöffnung zwischen dem Flansch 21 und dem Gasgeneratorträger eingeklemmt und wird zusätzlich von dem Befestigungselement 20 gehalten. Bei der hier gezeigten Ausführungsform ist der Gassack 12 in herkömmlicher Weise über dem Diffusor 18 gefaltet.

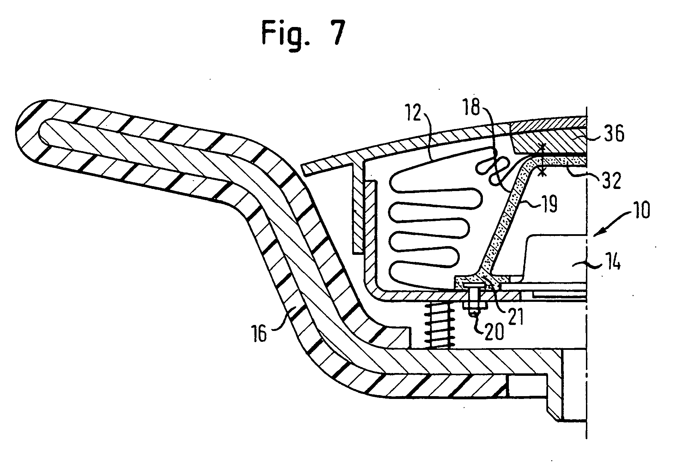

Bei einer weiteren, in Figur 7 gezeigten Ausführungsform kann vorgesehen sein, daß der Gassack 12 den Diffusor 18 ringförmig umgibt und an seinem Rand sowohl zwischen dem Flansch 21 und dem Gasgeneratorträger als auch zwischen dem Deckel 32 des Diffusors 18 und einer Halterung 36 eingeklemmt ist. Im übrigen bezeichnen gleiche Bezugszeichen in den Figuren jeweils Bauteile mit gleicher Funktion.

## Patentansprüche

1. Gassackmodul für eine Fahrzeuginsassen-Rückhaltevorrichtung, mit einem Gasgenerator (14) und einem den Gasgenerator (14) umgebenden Diffusor (18) mit einem topfförmigen Abschnitt (19), wobei der topfförmige Abschnitt (19) einen aus einem gesinterten porösen Material bestehenden gasdurchlässigen Filterabschnitt (34) aufweist und das poröse Material aus der Gruppe der gesinterten Metallpulver, gesinterten Metallfasern oder Metallschäume ausgewählt ist, wobei der topfförmige Abschnitt (19) als Deformationselement ausgelegt ist, und wobei eine Oberseite des topfförmigen Abschnitts (19) so vom Gasgenerator (14) beabstandet ist, daß ein Teil der Aufprallenergie eines Fahrzeuginsassen durch eine Verformung des Diffusors (18) abgebaut werden kann.

2. Gassackmodul nach Anspruch 1, bei dem der Filterabschnitt (34) so ausgelegt ist, daß er als Partikelfilter für durchströmendes Gas (G) wirkt.

3. Gassackmodul nach Anspruch 1 oder 2, **dadurch gekennzeichnet, daß** der Filterabschnitt (34) aus gesinterten Metallfasern mit einer Porosität von 85 - 95 % besteht.

4. Gassackmodul nach einem der vorhergehenden Ansprüche, **dadurch gekennzeichnet, daß** der topfförmige Abschnitt (19) aus einer Seitenwand (30) und einem Deckel (32) besteht und die Seitenwand (30) aus dem gesinterten porösen Material gebildet ist.

5. Gassackmodul nach einem der Ansprüche 1 bis 3, **dadurch gekennzeichnet, daß** der topfförmige Abschnitt (19), vorzugsweise der gesamte Diffusor (18) aus dem gesinterten porösen Material besteht.

6. Gassackmodul nach einem der vorhergehenden Ansprüche, bei dem der Gasgenerator (14) schwingend gelagert ist.

7. Gassackmodul nach einem der vorhergehenden Ansprüche, **dadurch gekennzeichnet, daß** der topfförmige Abschnitt (19) randseitig einen seitlich abstehenden ringförmigen Flansch (21) aufweist, der ebenfalls aus dem gesinterten porösen Material besteht, wobei wenigstens ein Befestigungselement in den Flansch eingeformt und metallurgisch mit dem gesinterten porösen Material verbunden ist.

8. Gassackmodul nach einem der vorhergehenden Ansprüche, **dadurch gekennzeichnet, daß** der Gasgenerator (14) kein Filter aufweist.

## Claims

1. A gas bag module for a vehicle occupant restraint device, comprising a gas generator (14) and a diffusor (18) surrounding the gas generator (14) and having a cup-shaped section (19), the cup-shaped section (19) having a gas-permeable filter section (34) which consists of a sintered porous material and the porous material being selected from the group of sintered metal powders, sintered metal fibers or metal foams, the cup-shaped section (19) being designed as a deformation element and an upper side of the cup-shaped section (19) being spaced apart from the gas generator (14) such that a portion of the impact energy of a vehicle occupant can be dissipated by a deformation of the diffusor (18).

2. The gas bag module according to Claim 1, in which the filter section (34) is designed such that it acts as a particle filter for gas (G) flowing through.

3. The gas bag module according to Claim 1 or 2, **characterized in that** the filter section (34) consists of sintered metal fibers with a porosity of 85-95%.

4. The gas bag module according to any of the preceding claims, **characterized in that** the cup-shaped section (19) consists of a side wall (30) and a cover (32) and the side wall (30) is formed from the sintered porous material.

5. The gas bag module according to any of Claims 1 to 3, **characterized in that** the cup-shaped section (19), preferably the entire diffusor (18), consists of the sintered porous material.

6. The gas bag module according to any of the preceding claims, in which the gas generator (14) is mounted so as to be able to oscillate.

7. The gas bag module according to any of the preceding claims, **characterized in that** the cup-shaped section (19) has on the rim side a laterally projecting ring-shaped flange (21), which likewise consists of the sintered porous material, at least one fastening element being formed into the flange and being connected metallurgically with the sintered porous material.

8. The gas bag module according to any of the preceding claims, **characterized in that** the gas generator (14) does not have a filter.

## Revendications

1. Module de coussin à gaz pour un système de retenue de passager de véhicule, comportant un générateur de gaz (14) et un diffuseur (18) qui entoure le générateur de gaz (14) et qui présente un tronçon (19) en forme de pot, le tronçon (19) en forme de pot présentant un tronçon de filtre (34) perméable aux gaz et constitué par un matériau poreux fritté, et le matériau poreux étant choisi parmi le groupe des poudres métalliques frittées, des fibres métalliques et mousses métalliques frittées, le tronçon (19) en forme de pot étant conçu en tant qu'élément de déformation, et une face supérieure du tronçon (19) en forme de pot étant espacée du générateur de gaz (14) de telle sorte qu'une partie de l'énergie d'impact d'un passager de véhicule peut être dissipée par une déformation du diffuseur (18).

2. Module de coussin à gaz selon la revendication 1, dans lequel le tronçon de filtre (34) est conçu de telle sorte qu'il agit en tant que filtre à particules pour du gaz (G) en écoulement.

3. Module de coussin à gaz selon la revendication 1 ou 2, **caractérisé en ce que** le tronçon de filtre (34) est constitué par des fibres métalliques frittées avec une porosité de 85 à 95 %.

4. Module de coussin à gaz selon l'une des revendications précédentes, **caractérisé en ce que** le tronçon (19) en forme de pot est constitué par une paroi latérale (30) et un couvercle (32), et la paroi latérale (30) est formée à partir du matériau poreux fritté.

5. Module de coussin à gaz selon l'une des revendications 1 à 3, **caractérisé en ce que** le tronçon (19) en forme de pot, de préférence tout le diffuseur (18), est constitué par le matériau poreux fritté.

6. Module de coussin à gaz selon l'une des revendications précédentes, dans lequel le générateur de gaz (14) est monté de manière à osciller.

7. Module de coussin à gaz selon l'une des revendications précédentes, **caractérisé en ce que** le tronçon (19) en forme de pot présente sur son bord une bride (21) annulaire faisant saillie latéralement, laquelle est également constituée par le matériau poreux fritté, au moins un élément de fixation étant formé dans la bride et relié au matériau poreux fritté par technique métallurgique.

8. Module de coussin à gaz selon l'une des revendications précédentes, **caractérisé en ce que** le générateur de gaz (14) ne présente pas de filtre.
